# EUROPEAN PATENT APPLICATION

(11) **EP 1 914 461 A1**
(43) Date of publication of application: **23.04.2008**
(21) Application number: 07118735.5
(22) Date of filing: 18.10.2007
(51) Int. Cl.: F16L 3/223

(54) **System for securing pipes to a supporting structural element**

(30) Priority: 20.10.2006 SE 0602200
(71) Applicant: Cargotec Patenter AB, SE 341-81 Ljungby (SE)
(72) Inventor: Nilsson, Johan, SE-820 40 Hudiksvall (SE)
(74) Representative: Löfgren, Jonas

(57) **Abstract**

The invention relates to a system for securing pipes to a supporting structural element, which system comprises mounting modules (1), each provided with at least one pipe seat (2a, 2b) designed for receiving a pipe. The mounting modules (1) are provided with coupling members (4a, 4b), which by mutual force fit and/or positive locking allow mutual coupling of individual mounting modules (1) in a row to an elongated, self-supporting and shape stable mounting rail (10) with the pipe seats (2a, 2b) of the mounting modules included in the mounting rail extending parallel to each other, perpendicularly to the mounting rail's longitudinal axis.

## Description

### FIELD OF THE INVENTION AND PRIOR ART

The present invention relates to a system for securing pipes to a supporting structural element, which system comprises mounting modules, each provided with at least one pipe seat designed for receiving a pipe.

In this description and the subsequent claims, the expression "pipe" is also intended to include flexible hoses.

Some apparatuses, for example hydraulic cranes, are provided with extensive pipe systems which can comprise pipes for conveying hydraulic oil or compressed air and pipes which enclose electric cables. These pipes are often arranged in parallel with each other and are by means of pipe clamps or like attached to a supporting structural element of the apparatus. The number of pipes often becomes large for a hydraulic crane and the available surface for attachment of the pipes is generally limited. To install a pipe set on a hydraulic crane is therefore often a relatively troublesome and time-consuming work.

The US patent document US 3 216 683 A describes a system for attachment of pipes to a supporting structural element, which system comprises mutually interacting mounting modules, each provided with a pipe seat designed for receiving a pipe.

### OBJECT OF THE INVENTION

The object of the present invention is to achieve a further development of a pipe securing system of the type indicated above, so as to provide a pipe securing system with a design and function which in at least some aspects provide an advantage compared to previously known systems of the type here in question.

### SUMMARY OF THE INVENTION

According to the present invention, said object is achieved by means of a system having the features defined in claim 1.

The inventive pipe securing system comprises mounting modules, each provided with at least one pipe seat designed for receiving a pipe. These mounting modules are provided with coupling members which, by way of mutual force fit and/or positive locking, allow mutual coupling of individual mounting modules in a row to an elongated, self-supporting and shape stable mounting rail with the pipe seats of the mounting modules included in the mounting rail extending parallel to each other, perpendicularly to the mounting rail's longitudinal axis. In this way it becomes possible to quickly and easily couple together a suitable number of mounting modules to a mounting rail, which can be handled as an independent fastening element and be applied against a set of parallel pipes in order to secure these pipes to an underlying structural element. During the securing phase itself, i.e. when the pipes by means of the mounting modules are secured to the structural element in question, the individual mounting modules do consequently not need to be handled and secured to the structural element one by one, but can instead be handled and secured to the structural element as a joint unit in the form of said mounting rail. The installation work is in this way facilitated. Furthermore, owing to the fact that the mounting modules are coupled together and hold on to each other by mutual force fit and/or positive locking between their mutually interacting coupling members, there is no need for separate fastening members in the form of screws, bolts or the like in order to couple the mounting modules to each other.

According to one embodiment of the invention, the respective mounting module is provided with a male-shaped coupling member at a first end and a corresponding female-shaped coupling member at the opposite second end. By way of mutual force fit and/or positive locking, the male-shaped coupling member of a mounting module is in this case connectable to the female-shaped coupling member of each of the other mounting modules included in the system.

According to another embodiment of the invention, at least some of the mounting modules included in the system are each provided with two pipe seats designed for receiving a respective pipe. In this way, the number of mounting modules which need to be used and handled in order to secure of a certain number of pipes to a structural element is reduced. These mounting modules, provided with double pipe seats, are suitable for installing pipes arranged in pairs. Such pipes arranged in pairs may for instance comprise a feeding line for hydraulic oil or compressed air and an associated return line, and are inter alia commonly occurring in hydraulic cranes.

According to another embodiment of the invention, the system comprises two or more different sets of mounting modules, where the pipe seats of the mounting modules in one set have a dimensioning which differs from the dimensioning of the pipe seats of the mounting modules in the other sets. In this way, it becomes possible, in a simple way, to form mounting rails adapted for installing pipes with different outer diameters.

According to another embodiment of the invention, at least some of the mounting modules included in the system are each on its top side provided with at least one guide groove for a pipe, the respective guide groove extending parallel to the mounting module's pipe seat or pipe seats. In this way, a possibility is created to arrange two mounting rails on top of each other with a set of pipes clamped between the guide grooves of a lower mounting rail and the pipe seats of an upper mounting rail mounted on top of the lower mounting rail.

According to another embodiment of the invention, the system comprises elongated fastening rails, each intended to be attached to a supporting structural element and being provided with threaded holes distributed along the fastening rail with a mutual distance which corresponds to the mutual distance between the through holes in a mounting rail formed by mutually coupled mounting modules, the respective threaded hole being designed for receiving a threaded fastening member extending through one of said through holes in order to allow clamping of said mounting rail to the fastening rail. A mounting rail formed by two or more mounting modules is with advantage secured to a desired structural element by way of such a fastening rail, the fastening rail being first mounted to the structural element, for instance by welding, and the mounting rail being then fastened to the fastening rail by means of two or more threaded fastening members.

According to an alternative, the fastening rails are provided in the form of an elongated fastening rail strip, which is provided with transversal notches in order to facilitate splitting of the fastening rail strip into individual fastening rails. In this way, the fastening rails may consequently be provided as piece goods in the form of said fastening rail strip, from which a fastening rail of a desired length, adapted to a mounting rail, can be detached.

According to another alternative, the system comprises rail modules, each comprising at least one threaded hole of said kind, the rail modules being provided with coupling members which allow mutual coupling of individual rail modules in a row to an elongated fastening rail. In this way, it consequently becomes possible to quickly and easily couple together a suitable number of rail modules to a fastening rail with a length corresponding to the length of the mounting rail which is to be mounted at the moment.

Other features and advantages of the inventive system will appear from the dependent claims and the subsequent description.

In this description and the subsequent claims, the expression "self supporting and shape stable mounting rail" refers to a mounting rail which has sufficient stiffness and stability to keep its shape when exposed to influence with forces of smaller magnitude, so that the mounting rail for instance can be lifted at one end on its own without collapsing.

### BRIEF DESCRIPTION OF THE DRAWINGS

The invention will in the following be more closely described by means of embodiment examples, with reference to the appended drawings, where:
- Fig 1: is a perspective view from above of a mounting module according to a first variant included in a system according to present invention,
- Fig 2: is a perspective view from underneath of the mounting module according to Fig 1,
- Fig 3a: is a perspective view of a mounting rail formed by three mutually coupled mounting modules according to Figs 1 and 2,
- Fig 3b: is a cross-section through two interacting coupling members of two mutually coupled mounting modules in the mounting rail according to Fig 3a,
- Fig 4: illustrates pipes secured to a supporting structural element by means of a mounting rail and a fastening rail,
- Fig 5: illustrates pipes secured to a supporting structural element by means of two mounting rails and one fastening rail,
- Fig 6: is a perspective view of a rail module included in a system according to the present invention,
- Fig 7: is a perspective view of a fastening rail formed by three mutually coupled rail modules according to Fig 6,
- Fig 8: is a lateral view of a fastening rail welded to a supporting structural element,
- Fig 9: is a planar view of a fastening rail strip for forming fastening rails,
- Fig 10: is a perspective view of a mounting module according to a second variant included in a system according to the present invention, and
- Fig 11: is a perspective view of a mounting rail formed by two mutually coupled mounting modules according to Fig 10.

### DETAILED DESCRIPTION OF PREFERRED EMBODIMENTS

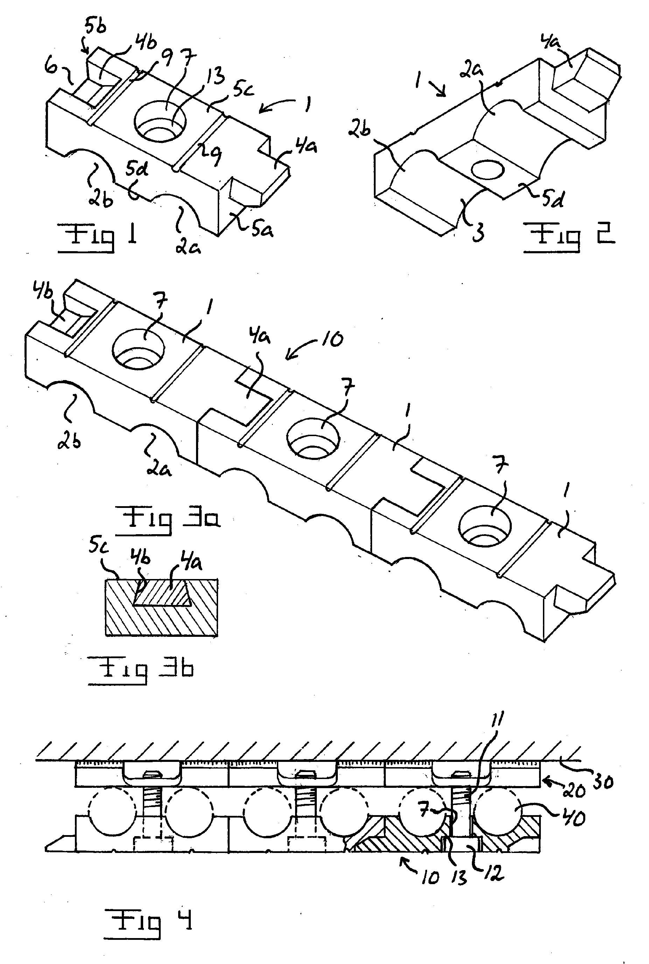

In Figs 1 and 2, a variant of a mounting module 1 included in a system according to the present invention is illustrated. The mounting module 1 is provided with two pipe seats 2a, 2b on its underside 5d, which are designed for receiving one pipe each in order to fix the respective pipe to a supporting structural element. The inventive system may also comprise mounting modules which are provided with only one pipe seat or more than two pipe seats. In the illustrated example, the respective pipe seat 2a, 2b has an essentially concavely curved support surface 3 with an arched profile so as to essentially connect to the envelope surface of a circular pipe intended to be received in the pipe seat.

The mounting module 1 is provided with coupling members 4a, 4b, each connectable with a corresponding coupling member 4b, 4a of another mounting module of the same type, and by that allow mutual coupling of individual mounting modules 1 of the same type in a row to an elongated self-supporting and shape stable mounting rail 10 (see Fig 3a) with the pipe seats 2a, 2b of the mounting modules included in the mounting rail extending parallel to each other, perpendicularly to the mounting rail's longitudinal axis. The mutually interacting coupling members 4a, 4b of two mutually coupled mounting modules 1 are designed to hold on to each other by mutual force fit and/or positive locking, so that the coupling members and the mounting modules thereby remain held together after having been coupled, until a separating force of sufficient magnitude is applied to the mounting modules.

In the variant illustrated in Figs 1 and 2, the mounting module 1 is provided with a male-shaped first coupling member 4a at a first end and a corresponding female-shaped second coupling member 4b at the opposite second end. The male-shaped coupling member 4a of a mounting module 1 of the type illustrated in Figs 1 and 2 is receivable with force fit in the female-shaped coupling member 4b of each of the other mounting modules of the same type included in the system. In the example here illustrated, the female-shaped coupling member 4b has the shape of an elongated recess extending in the mounting module's longitudinal direction, which has an entrance opening 6 arranged in one 5b of the end surfaces of the mounting module, via which entrance opening a corresponding male-shape coupling member 4a of another mounting module is insertable into the recess in the mounting modules' longitudinal direction. In this case, the male-shaped coupling member 4a has the shape of a projection extending in the mounting module's longitudinal direction, which projection projects from the opposite end surface 5a of the mounting module. Two mounting modules 1 of the type illustrated in Figs 1 and 2 are thus connectable to each other by pressing the male-shaped coupling member 4a of one of the mounting modules into the female-shaped coupling member 4b of the other mounting module via said entrance opening 6. In the illustrated example, the recess 4b is also open towards the top side 5c of the mounting module and has the shape of a truncated triangle with the peak facing the top side 5c of the mounting module, the male-shaped coupling member 4a having a corresponding shape.

A mounting rail 10 formed by three coupled mounting modules 1 of the type illustrated in Figs 1 and 2 is shown in Fig 3a. By clamp action between the interacting coupling members 4a, 4b of the mutually coupled mounting modules 1, a pulling apart of the mounting modules in the mounting rail's longitudinal direction is counteracted; and by positive locking between the interacting coupling members 4a, 4b of the mutually coupled mounting modules 1, a pulling apart of the mounting modules in the mounting rail's cross-direction is counteracted.

An alternative variant of a mounting module 1' for a system according to the present invention is illustrated in Fig 10. Also this mounting module 1' is provided with a first coupling member 4a' at a first end, and a corresponding second coupling member 4b' at the opposite second end. The first coupling member 4a' of a mounting module 1' of the type illustrated in Fig 10 is receivable in the second coupling member 4b' in each of the mounting modules of the same type included in the system. In the example here illustrated, the first coupling member 4a' comprises an upwards directed projection 41a extending in the mounting module's cross-direction and a groove 42a formed between this projection 41a and the end surface 5a of the mounting module, while the other coupling member 4b' comprises a downwards directed projection 41 b extending in the mounting module's cross-direction and a groove 42b formed between this projection 41b and the end surface 5b of the mounting module. Two mounting modules 1' of the type illustrated in Fig 10 are connectable with each other in that the projection 41 a, 41 b of each of the two interacting coupling members 4a', 4b' is inserted into the groove 42b, 42a of the other coupling member by displacement of the mounting modules towards each other in the mounting modules' cross-direction.

A mounting rail 10 formed by two coupled mounting modules 1' of the type illustrated in Fig 10 is shown in Fig 11. By positive locking between the interacting coupling members 4a', 4b' of the mutually coupled mounting modules 1', a pulling apart of the mounting modules in the mounting rail's longitudinal direction is counteracted; and by clamp action between the interacting coupling members 4a', 4b' of the mutually coupled mounting modules 1', a pulling apart of the mounting modules in the mounting rail's cross-direction is counteracted.

Mounting modules for a system according to the present invention may naturally also have other designs than the two variants described above, and may have coupling members which interact with each other in other ways than described above. The main thing is that the mounting modules easily and quickly can be coupled together to an elongated self-supporting and shape stable mounting rail without requiring separate fastening members in the form of screws, bolts or the like.

The first coupling members 4a, 4a' and the second coupling members 4b, 4b' could be provided with mutually interacting snap members (not shown) so as to allow the first coupling member 4a, 4a' of one of the mounting modules included in the system to engage with snap effect in the second coupling member 4b, 4b' of each of the other mounting modules included in the system by means of said mutually interacting snap members. In this way, it becomes possible to increase further the resistance against a separation of two coupled mounting modules. The snap members may for instance consist of a projection in one of the coupling members and a groove or recess in the other coupling member, which are so designed that the projection will come into engagement with the groove/recess when the coupling members have taken the intended coupling position in relation to each other.

The inventive system may with advantage comprise two or more different sets of mounting modules where the pipe seats 2a, 2b of the mounting modules in one set have a dimensioning which differs from the dimensioning of the pipe seats of the mounting modules in the other sets, whereby it becomes possible to adapt the mounting rails to pipes with mutually different outer diameter. In this case, the mounting modules in the respective set suitably have a colour marking which differs from corresponding colour markings of the mounting modules in the other sets, so that it becomes possible to quickly and easily see which type of pipe a certain mounting module is intended for.

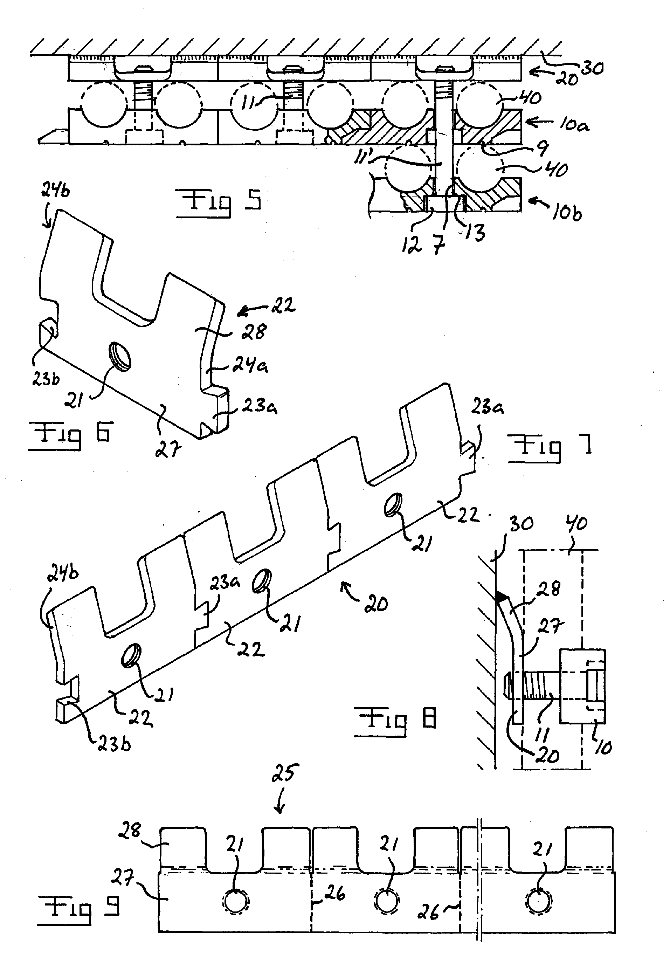

The respective mounting module 1, 1' is provided with a through hole 7 designed for receiving an elongated fastening member 11 (see Figs 4 and 5) in order to allow securing of the mounting module to a supporting structural element 30. The mounting modules 1, 1' may with advantage be made of plastic.

The inventive system also suitably comprises elongated fastening rails 20, a mounting rail 10 of the above-mentioned type being intended to be secured to a supporting structural element 30 via such a fastening rail 20. The fastening rail 20 is provided with threaded holes 21 distributed along the fastening rail with a mutual distance which corresponds to the mutual distance between the through holes 7 in a mounting rail 10 formed by mutually coupled mounting modules 1, 1', the respective threaded hole 21 being designed for receiving a threaded part of a fastening member 11 in the form of a threaded screw or bolt extending through one of said through holes 7 in order to allow fastening of the mounting rail 10 to the fastening rail 20.

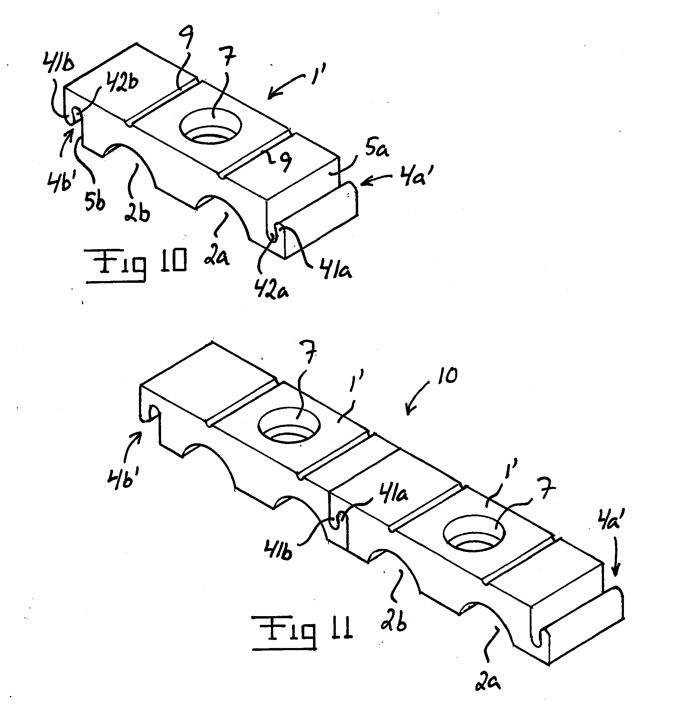

The fastening rails 20 may with advantage be formed by individual rail modules 22, for instance of the type illustrated in Fig 6, each of which comprising at least one threaded hole 21 of the type mentioned above. The rail modules 22 are provided with coupling members 23a, 23b which allow mutual coupling of individual rail modules 22 in a row to an elongated fastening rail 20 (see Fig 7). In the example illustrated in Figs 7 and 8, the respective rail module 22 is provided with a male-shaped coupling member 23a at a first end and a corresponding female-shaped coupling member 23b at the opposite second end. The male-shaped coupling member 23a of a rail module 22 of the type illustrated in Figs 7 and 8 is receivable in the female-shaped coupling member 23b of each of the other rail modules of the same type included in the system. In the example here illustrated, the female-shaped coupling member 23b has the shape of a recess arranged in one short side 24b of the rail module. In this case, the male-shaped coupling member 23a has the shape of a projection, which projects from the opposite short side 24a of the rail module. Two rail modules 22 of the type illustrated in Fig 7 are thus connectable to each other by insertion of the male-shaped coupling member 23a of one of the rail modules into the female-shaped coupling member 23b of the other rail module.

A fastening rail 20 formed by three coupled rail modules 22 of the type illustrated in Fig 7 is shown in Fig 8.

The fastening rails could alternatively be provided in the form of an elongated fastening rail strip 25 provided with transversal notches 26, for instance in the form of breaking notches, so as to facilitate splitting of the fastening rail strip into individual fastening rails 20, as illustrated in Fig 9.

The respective fastening rail 20 is intended to constitute a counter member for the pipes 40 which are braced against a supporting structural element 30 by means of a mounting rail 10 and is at the same time acting as a holder for the mounting rail. The pipes 40 are clamped between the mounting rail 10 and the associated fastening rail 20 by tightening of fastening members 11 of the type mentioned above, as illustrated in Figs 4, 5 and 8. The respective fastening member 11 is brought through one of the through holes 7 of the mounting rail 10 and is secured by screwing to one of the threaded holes 21 of the associated fastening rail. The head 12 of the fastening member bears against a shoulder 13 formed by a depression around the hole 7 and thereby exerts a compressive force against the mounting rail 10, which presses this in the direction towards the fastening rail 20.

In the illustrated examples, the mounting modules 1, 1' are on their top side 5c provided with guide grooves 9 for pipes, the respective guide groove 9 extending parallel to the mounting module's pipe seats 2a, 2b. The respective guide groove 9 is arranged opposite a pipe seat 2a, 2b of the associated mounting module and straight above the central line of this pipe seat. By means of the guide grooves 9, the installation of pipes 40 in two or more rows arranged above each other, as illustrated in Fig 5, with pipes 40 in an outer row clamped between the top side of a lower mounting rail 10a and a pipe seat of an upper mounting rail 10b, is facilitated. In this case, the guide grooves 9 on the top side of the lower mounting rail 10a act as guides for the pipes in the pipe row arranged on top of this mounting rail. Where two or more mounting rails 10a, 10b are arranged on top of each other, longer fastening members 11' are used, which extend through holes 7, lying in line with each other, in all these mounting rails, and which are secured by screwing to one of the threaded holes 21 of an associated fastening rail 20.

The fastening rail 20 is suitably of metal so as to make it possible to secure it to a metal structural element 30 by welding, as illustrated in Fig 8. In the illustrated example, the rail modules and the fastening rail strip 25, respectively, has an essentially flat base part 27 where said threaded holes 21 are arranged and a flange part 28 projecting at an angle from one of the long sides of the base part, via which flange part a fastening rail 20 formed by rail modules or by the fastening rail strips is intended to be secured to a desired structural element 30.

The inventive system is for instance very advantageous to use for installing pipes in a pipe system of a hydraulic crane.

The invention is of course not in any way limited to the embodiments described above. On the contrary, several possibilities to modifications thereof should be apparent to a person skilled in the art without departing from the basic idea of the invention as defined in the appended claims.

## Claims

1. A system for securing pipes to a supporting structural element, which system comprises mounting modules (1; 1'), each provided with at least one pipe seat (2a, 2b) designed for receiving a pipe, **characterized in that** the mounting modules (1; 1') are provided with coupling members (4a, 4b; 4a', 4b'), which by way of mutual force fit and/or positive locking allow mutual coupling of individual mounting modules (1; 1') in a row to an elongated, self-supporting and shape stable mounting rail (10) with the pipe seats (2a, 2b) of the mounting modules included in the mounting rail extending parallel to each other, perpendicularly to the mounting rail's longitudinal axis.

2. A system according to claim 1, **characterized in that** the respective mounting module (1) is provided with a male-shaped coupling member (4a) at a first end and a corresponding female-shaped coupling member (4b) at the opposite second end.

3. A system according to claim 2, **characterized in that** the male-shaped coupling member (4a) of one of the mounting modules included in the system is receivable with force fit and/or positive locking in the female-shaped coupling member (4b) of each of the other mounting modules included in the system.

4. A system according to any of claims 1-3, **characterized in that** the coupling members (4a, 4b; 4a', 4b') are provided with mutually interacting snap members in order to allow a coupling member (4a; 4a') of one of the mounting modules included in the system to engage with snap effect in the corresponding coupling member (4b; 4b') of each of the other mounting modules included in the system by means of said mutually interacting snap members.

5. A system according to any of claims 1-4, **characterized in that** at least some of the mounting modules (1; 1') included in the system each is provided with two pipe seats (2a, 2b) designed for receiving a respective pipe.

6. A system according to any of claims 1-5, **characterized in that** the system comprise two or more different sets of mounting modules (1; 1') where the pipe seats (2a, 2b) in the mounting modules in one set have a dimensioning which differs from the dimensioning of the pipe seats (2a, 2b) in the mounting modules in the other sets.

7. A system according to claim 6, **characterized in that** the mounting modules in the respective set have a colour marking which differs from corresponding colour markings of the mounting modules in the other sets.

8. A system according to any of claims 1-7, **characterized in that** at least some of the mounting modules (1; 1') included in the system on its top side (5c) is provided with at least one guide groove (9) for a pipe, the respective guide groove (9) extending parallel to the mounting module's pipe seat or pipe seats (2a, 2b).

9. A system according to claim 8, **characterized in that** the respective guide groove (9) is arranged opposite to a pipe seat (2a, 2b) of the associated mounting module and directly above the central line of this pipe seat.

10. A system according to any of claims 1-9, **characterized in that** respective mounting module (1; 1') is provided with at least one through hole (7) designed for receiving an elongated fastening member (11, 11') in order to allow fastening of the mounting module to a supporting structural element.

11. A system according to claim 10, **characterized in that** the system comprises elongated fastening rails (20), the respective fastening rail being intended to be attached to a supporting structural element and being provided with threaded holes (21) distributed along the fastening rail with a mutual distance which corresponds to the mutual distance between the through holes (7) in a mounting rail (10) formed by mutually coupled mounting modules (1; 1'), the respective threaded hole (21) being designed for receiving a threaded fastening member (11, 11') extending through one of said through holes (7) in order to allow clamping of said mounting rail to the fastening rail.

12. A system according to claim 11, **characterized in that** fastening rails (20) are provided in the form of an elongated fastening rail strip (25) which is provided with transversal notches (26) in order to facilitate splitting of the fastening rail strip into individual fastening rails (20).

13. A system according to claim 11, **characterized in that** the system comprise rail modules (22), each comprising at least one threaded hole (21) of said kind, the rail modules (22) being provided with coupling members (23a, 23b) which allow mutual coupling of individual rail modules (22) in a row to an elongated fastening rail (20).

14. A system according to any of claims 1-13, **characterized in that** the mounting modules (1; 1') are made of plastic.

15. Use of a system according to any of claims 1-14 for installing pipes in a hydraulic crane.
